# EUROPEAN PATENT SPECIFICATION

(11) **EP 3 163 768 B1**
(45) Date of publication and mention of the grant of the patent: **28.11.2018**
(21) Application number: 14896355.6
(22) Date of filing: 13.10.2014
(51) Int. Cl.: H04B 10/07, H04B 10/079

(54) **AUTOMATIC POWER REDUCTION PROTECTION METHOD AND DEVICE, AND COMPUTER STORAGE MEDIUM**
VERFAHREN UND VORRICHTUNG ZUM AUTOMATISCHEN LEISTUNGSREDUZIERUNGSSCHUTZ UND COMPUTERSPEICHERMEDIUM
DISPOSITIF ET PROCÉDÉ DE PROTECTION DE RÉDUCTION AUTOMATIQUE DE PUISSANCE, ET SUPPORT DE STOCKAGE INFORMATIQUE

(30) Priority: 30.06.2014 CN 201410307247
(43) Date of publication of application: 03.05.2017
(73) Proprietor: ZTE Corporation, Shenzhen, Guangdong 518057 (CN)
(72) Inventor: LI, Bikai, Shenzhen Guangdong 518057 (CN)
(74) Representative: Savi, Massimiliano
(86) International application number: PCT/CN2014/088508
(87) International publication number: WO 2016/000351

(56) References cited:
- EP-A2- 1 006 682
- WO-A1-2006/087804
- CN-A- 101 453 266
- CN-A- 101 882 958
- US-A1- 2006 198 016
- US-A1- 2011 008 051
- US-B2- 8 483 560

## Description

### Technical Field

The present invention relates to an optical communication technology, and more particularly to an Automatic Power Reduction (APR) protection method and device and a computer storage medium.

### Background

In an optical fiber communication system, there are abnormal situations such as optical fiber breakage, unplugging an optical fiber connector, which may cause optical power loss. Considering safety of human eyes, the system is required to provide an ARP process under the condition of optical power loss in an Optical Transport Section (OTS) of a main optical channel. An Optical Transport Network (OTN) system usually starts an ARP process and switches off all amplifiers in the affected OTS only when detecting all optical signals of the main optical channel are lost; and when the optical signals are recovered, optical Line Amplifiers (LAs) are recovered to work. Therefore, optical power in an optical fiber may be ensured to be within a security level requirement under an off condition.

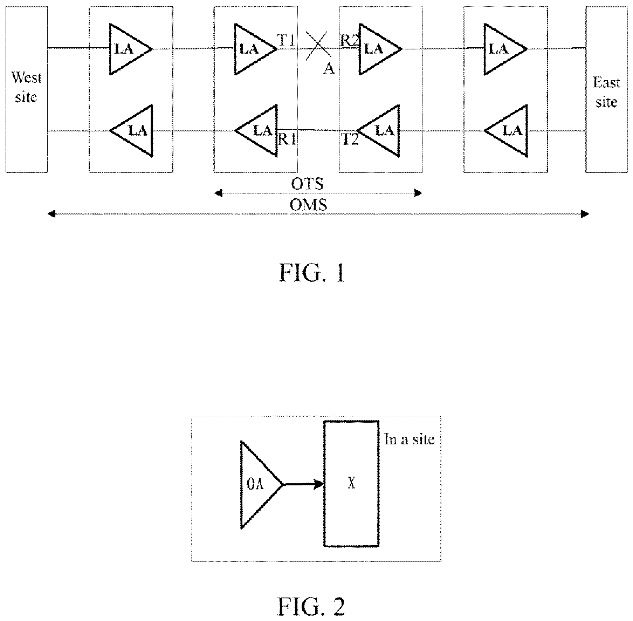

FIG. 1 is a schematic diagram of an existing APR process. As shown in FIG. 1, the APR process of the existing technology is set in a communication path formed by LAs between a west site and an east site, and a deactivation principle of the existing APR process is as follows: after an optical fiber at point A is broken, if signals are lost in succession in an OTS are detected at receiving port R2, output power at sending port T2 is reduced, and in such a manner, continuous signal loss in the OTS at receiving port R1 is caused, so that output power at sending port T1 is reduced. Therefore, it may be ensured that optical power in the OTS where point A with a failure is located is at a security level. An activation principle of the existing APR process is as follows: a restarting pulse signal is sent at sending port T1, an optical signal similar to a restarting pulse power level is sent after the restarting pulse signal is received at receiving port R2, and no restarting pulse signal but a normal optical signal is sent at sending port T1 after the optical signal similar to the restarting pulse power level is received at receiving port R1.

In a non-main optical channel in the west site or the east site, there also exist Optical Amplifiers (OAs) as well as the abnormal situations such as optical fiber breakage, unplugging the optical fiber connector, and there also exists a potential menace to human eyes when an engineer repairs an optical fiber of the non-main optical channel in the site or a tester executes a plugging and unplugging test operation on an optical fiber connector of the non-main optical channel in the site. A path formed by the OAs in the site may be asymmetric and unidirectional, only activation and deactivation of a single-ended APR process may be performed, but only an APR process of a bidirectional and symmetric path formed by LAs between sites in an OTS layer of a main optical channel is defined in the existing ITU-TG.664 standard, so that activation and deactivation processing requirements of an APR process of the asymmetric and unidirectional path in the site may not be met.

US 2006/0198016 A1 discloses an optical communications system initiates automatic power reduction by selecting a portion of a Raman optical pumping signal from optical signals propagating on an optical fiber span. A signal related to a magnitude of the selected portion of the Raman optical pumping signal is generated. Power of at least one of the optical data signals and the optical pumping signals propagating in the optical fiber span is reduced in response to the generated signal.

### Summary of the Invention

In view of above, embodiments of the present invention are intended to provide an APR protection method and device and a computer storage medium, which may solve the problem that activation and deactivation processing requirements of an APR process of an asymmetric and unidirectional path in a site cannot be satisfied.

The technical solutions of the embodiment of the present invention are implemented as follows.

An embodiment of the present invention provides an automatic power reduction APR protection device, which includes: a controller, a source board and a destination board, herein the controller is in communication connection with the source board and the destination board and the source board and the destination board are asymmetrically and unidirectionally connected through an optical fiber, herein
the destination board is arranged to, when detecting that an optical signal is abnormal, send a communication abnormality message including destination board information to the controller;
the controller is arranged to find corresponding source board information according to the destination board information, and send a first control instruction to the source board according to the source board information; and
the source board is arranged to reduce output power of the optical signal according to the received first control instruction.

In a specific embodiment of the present invention, the source board and the destination board are located in a same site.

In a specific embodiment of the present invention, the controller is further arranged to store a corresponding relationship between the source board and the destination board.

In a specific embodiment of the present invention, the device further includes: a network manager, arranged to generate the corresponding relationship between the source board and the destination board according to the source board information, the destination board information and an optical fiber connecting relationship, and send the corresponding relationship between the source board and the destination board to the controller for storage; or, the network manager is arranged to send the source board information, the destination board information and the optical fiber connecting relationship to the controller; and correspondingly, the controller is further arranged to generate the corresponding relationship between the source board and the destination board according to the source board information, the destination board information and the optical fiber connecting relationship.

In a specific embodiment of the present invention, the network manager is further arranged to, before generating the corresponding relationship between the source board and the destination board, or before sending the source board information, the destination board information and the optical fiber connecting relationship to the controller, receive the source board information, destination board information and optical fiber connecting relationship input by a user.

In a specific embodiment of the present invention, the destination board is arranged to detect that the optical signal is kept abnormal for more than a preset time threshold value.

In a specific embodiment of the present invention, the controller is further arranged to, after the source board reduces the output power of the optical signal, send a third control instruction to the source board, receive a communication normality message including the destination board information from the destination board, find the corresponding source board information according to the destination board information, and send a second control instruction to the source board according to the source board information;
the destination board is further arranged to send the communication normality message including the destination board information to the controller after receiving a restarting pulse signal sent by the source board; and
the source board is further arranged to send the restarting pulse signal to the destination board after receiving the third control instruction sent by the controller, and normally output an optical signal after receiving the second control instruction sent by the controller.

In a specific embodiment of the present invention, the board information includes a board address and/or a board port.

An embodiment of the present invention further provides an automatic power reduction APR protection method, which includes that:
when detecting that an optical signal is abnormal, a destination board sends a communication abnormality message including destination board information to a controller;
the controller finds corresponding source board information according to the destination board information, and sends a first control instruction to the source board according to the source board information; and
the source board reduces output power of the optical signal according to the received first control instruction.

In a specific embodiment of the present invention, before the step that the destination board sends the communication abnormality message including the destination board information to the controller, the method further includes that:
the controller stores a corresponding relationship between the source board and the destination board.

In a specific embodiment of the present invention, before the step that the controller stores the corresponding relationship between the source board and the destination board, the method further includes that:
a network manager generates the corresponding relationship between the source board and the destination board according to the source board information, the destination board information and an optical fiber connecting relationship, and sends the corresponding relationship between the source board and the destination board to the controller;
   or,
the network manager sends the source board information, the destination board information and the optical fiber connecting relationship to the controller; and
the controller generates the corresponding relationship between the source board and the destination board according to the source board information, the destination board information and the optical fiber connecting relationship.

In a specific embodiment of the present invention, before the step that the network manager generates the corresponding relationship between the source board and the destination board, or before the step that the network manager sends the source board information, the destination board information and the optical fiber connecting relationship, the method further includes that:
the network manager receives the source board information, destination board information and optical fiber connecting relationship input by a user.

In a specific embodiment of the present invention, the step that the destination board detects that the optical signal is abnormal includes that:
the destination board detects that the optical signal is kept abnormal for more than a preset time threshold value.

In a specific embodiment of the present invention, after the step that the source board reduces the output power of the optical signal, the method further includes that:
the controller sends a third control instruction to the source board;
the source board sends a restarting pulse signal to the destination board;
the destination board sends a communication normality message including the destination board information to the controller;
the controller finds the corresponding source board information according to the destination board information;
the controller sends a second control instruction to the source board according to the source board information; and
the source board normally outputs an optical signal.

In a specific embodiment of the present invention, the board information includes a board address and/or a board port.

The embodiment of the present invention further provides a computer storage medium, storing a computer-executable instruction, herein the computer-executable instruction is arranged to execute the abovementioned method.

According to the APR protection method and device and computer storage medium provided by the embodiment of the present invention, the destination board sends the communication abnormality message including the destination board information to the controller when detecting that the optical signal is abnormal, and the controller finds the corresponding source board information according to the destination board information, and sends the first control instruction to the source board to indicate the source board to reduce the output power of the optical signal according to the source board information. In such a manner, the embodiment of the present invention may meet activation and deactivation processing requirements of a single-ended APR process of an asymmetric and unidirectional path in a site, so that damage caused to human eyes by abnormal situations such as optical fiber breakage and unplugging optical fiber connector in the site may be avoided when an engineer repairs an optical fiber of a non-main optical channel in the site or a tester executes a plugging and unplugging test operation on the non-main optical channel in the site.

### Brief Description of Drawings

FIG. 1 is a schematic diagram of an existing APR process;
FIG. 2 is a schematic diagram of an APR process according to an embodiment of the present invention;
FIG. 3 is a structure diagram of an APR protection device according to an embodiment of the present invention;
FIG. 4 is a basic processing flowchart of an APR protection method when an optical signal is abnormal according to an embodiment of the present invention;
FIG. 5 is a detailed processing flowchart of an APR protection method when an optical signal is abnormal according to an embodiment of the present invention; and
FIG. 6 is a processing flowchart of an APR protection method after an abnormality is repaired according to an embodiment of the present invention.

### Specific Embodiments

It is important to note that an APR process of the existing technology, as shown in FIG. 1, is set in a path between a west site and an east site; and the embodiment of the present invention is disclosed for a path in the west site or the east site, FIG. 2 is a schematic diagram of an APR process according to an embodiment of the present invention, as shown in FIG. 2, single board OA and single board X are both communication equipment in the same site, and here, single board X is a general term of communication equipment with a strict requirement on input power in the site.

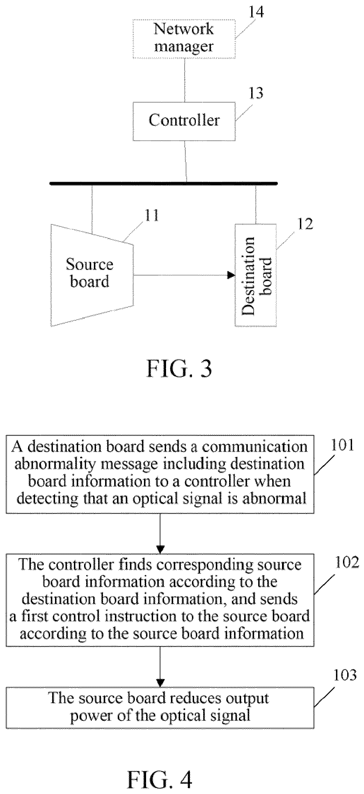

FIG. 3 is a structure diagram of an APR protection device according to an embodiment of the present invention, and as shown in FIG. 3, the APR protection device includes: a controller 13, a source board 11 and a destination board 12, herein
the controller 13 is in communication connection with the source board 11 and the destination board 12; the source board and the destination board are asymmetrically and unidirectionally connected through an optical fiber.

It is important to note that the source board 11 may be an LA mentioned before and may also be an OA, and the destination board 12 is a single board connected to a downstream of the source board 11.

The controller 13 is connected with the source board 11 and the destination board 12 through a communication bus, and only if a communication protocol adopted for the controller 13, the source board 11 and the destination board 12 should meet the condition that a packet loss rate is lower than 0.01% and an uplink and downlink communication response time of a single message is shorter than 10ms, for example: a Transmission Control Protocol (TCP), a User Datagram Protocol (UDP) or a private communication protocol meeting the abovementioned condition is adopted, it may be ensured that an activation and deactivation time of an APR process may not so long.

The destination board 12 is arranged to send a communication abnormality message including destination board information to the controller when detecting that an optical signal is abnormal.

Herein an abnormality of the optical signal includes an abnormal phenomenon of optical signal loss, optical signal loss and weakening or the like caused by optical fiber breakage , plugging optical fiber connector or virtual connection.

Specifically, after receiving the optical power, the destination board 12 judges whether optical power of the optical signal is lower than optical power of an optical signal received during normal communication , and if YES, the destination board 12 determines that the optical signal received by the destination board 12 is abnormal, and further determines that a communication path between the source board 11 and the destination board 12 is abnormal, and the destination board sends the communication abnormality message including the destination board information to the controller 13 immediately after detecting the abnormality, or, sends the communication abnormality message including the destination board information to the controller 13 after detecting that the optical signal is kept abnormal for more than a preset time threshold value, such as 500ms, herein the destination board information includes a destination board address and/or a destination board port.

The controller 13 is arranged to find corresponding source board information according to the destination board 12 information, and send a first control instruction to the source board according to the source board 11 information.

Specifically, the controller 13 pre-stores a corresponding relationship between the source board 11 and the destination board 12, herein the source board information includes a source board address and/or a destination board port.

It is important to note that it is better to adopt the same standard for the source board information and the destination board information to facilitate management of the controller 13 over the source board information and the destination board information, that is: the source board information and the destination board information only include the board addresses, or only include the board ports, or include both the board addresses and the board ports. Specifically, the corresponding relationship between the source board 11 and the destination board 12 may adopt any one in Table 1.

**Table 1**

| | Source board | Destination board |
|---|---|---|
| 1 | Source board address | Destination board address |
| 2 | Source board port | Destination board port |
| 3 | Source board address and port | Destination board address and port |

It is important to note that the embodiment of the present invention is preferably implemented in the third manner.

The controller 13 may store the corresponding connecting relationship between the source board and the destination board in form of a linked list or tree structure, and for example, if the source board information and the destination board information both include the board addresses and the board ports, node contents of each linked list or tree include four contents, i.e. the source board address, the source board port, the destination board address and the destination board port.

The controller 13 finds the corresponding source board information according to the abovementioned corresponding relationship between the source board 11 and the destination board 12 and the communication abnormality message, sent by the destination board, including the destination board information, finds the corresponding source board 11 according to the source board information, and sends a first control instruction to the source board 11.

Here, the first control instruction is intended to indicate the source board 11 to reduce output power of the optical signal; and the source board 11 reduces the output power of the optical signal after receiving the first control instruction.

It is important to note that: in order to distinguish two control instructions, sequentially sent by the controller 13, with different functions, the control instruction sent early by the controller 13 may be called the first control instruction, the control instruction sent later by the controller 13 may be called a second control instruction, and so on for distinguishing.

The source board is arranged to reduce the output power of the optical signal according to the received first control instruction.

According to the embodiment of the present invention, the destination board detects that the optical signal is abnormal and sends the communication abnormality message including the destination board information to the controller, and the controller finds the corresponding source board information according to the destination board information, and sends the first control instruction to the source board to indicate the source board to reduce the output power of the optical signal according to the source board information. In such a manner, the embodiment of the present invention may meet activation and deactivation processing requirements of a single-ended APR process of an asymmetric and unidirectional path in a site, so that damage caused to human eyes by an abnormal situations such as optical fiber breakage, unplugging the optical fiber connector in the site may be avoided when an engineer repairs an optical fiber of a non-main optical channel in the site or a tester executes a plugging and unplugging test operation on the non-main optical channel in the site.

In a specific embodiment, the source board 11 and the destination board 12 are located in the same site.

The source board 11 and destination board 12 of the embodiment of the present invention may be single boards located in the same site, so that the embodiment of the present invention may meet the activation and deactivation processing requirements of the single-ended APR process of the asymmetric and unidirectional path in the site, and the damage caused to the human eyes by the abnormal situations such as optical fiber breakage, unplugging optical fiber connector in the site may be avoided when the engineer repairs the optical fiber of a non-main optical channel in the site or the tester executes the plugging and unplugging test operation on the non-main optical channel in the site.

In a specific embodiment, the device further includes: a network manager 14;
the network manager 14 is in communication connection with the controller 13; and a connecting manner for the network manager 14 and the controller 13 may be wired connection, for example, connection through the communication bus. A communication protocol for the network manager 14 and the controller 13 maybe the TCP and the UDP.

The network manager 14 is arranged to receive the source board information, destination board information and optical fiber connecting relationship input by a user, generate the corresponding relationship between the source board and the destination board according to the source board information, the destination board information and the optical fiber connecting relationship, and send the corresponding relationship between the source board and the destination board to the controller 13 for storage; or, send the source board information, the destination board information and the optical fiber connecting relationship to the controller 13.

And correspondingly, the controller 13 is further arranged to generate the corresponding relationship between the source board and the destination board according to the source board information, the destination board information and the optical fiber connecting relationship.

Specifically, the user may simultaneously input multiple pieces of source board information, destination board information and optical fiber connecting relationships, and for example, a form of the source board information, destination board information and optical fiber connecting relationship input by the user may be board information of source board 1-board information of destination board 1, board information of source board 2-board information of destination board 2, and the like. Herein board information of source board 1-board information of destination board 1 represents an optical fiber communication path between source board 1 and destination board 1.

After the abovementioned communication abnormality is repaired, it is necessary to recover communication into a normal state.

In a specific embodiment, the controller 13 is further arranged to send a third control instruction to the source board 11, and send a second control instruction to the source board 11 according to the source board information after receiving a communication normality message including the destination board information from the destination board 12 and after finding the corresponding source board information according to the destination board information;
the destination board 12 is further arranged to send the communication normality message including the destination board information to the controller 13; and
the source board 11 is further arranged to send a restarting pulse signal to the destination board 12, and normally output an optical signal after receiving the second control instruction sent by the controller 13.

Specifically, the controller 13 sends the third control instruction to the source board 12, and the controller 13 may automatically send the third control instruction to the source board 11 at intervals. For example, sending the third control instruction once to the source board 11 every 100s or 300s. And the controller 13 may also be manually controlled, for example, the controller 13 is manually controlled to send the third control instruction to the source board 11 after a repairer finishes repairing a communication line; after receiving the restarting pulse signal, the source board 11 sends it to the destination board 12. And the destination board 12 sends the communication normality message including the destination board information to the controller 13.

Correspondingly, the controller 13 finds the corresponding source board information according to the destination board information, and sends the second control instruction to the source board 11 according to the source board information.

Here, the second control instruction is arranged to indicate the source board 11 to normally output the optical signal, and the source board 11 outputs the optical signal according to normal power after receiving the second control instruction.

In a specific embodiment, the network manager 14 is further arranged to send a deletion instruction to the controller 13. Herein, the deletion instruction includes at least one of the following information: the source board information, the destination board information and the optical fiber connecting relationship; and correspondingly, the controller 13 is further arranged to delete the corresponding relationship between the source board and the destination board according to the information included in the deletion instruction.

Specifically, when the path between the source board and the destination board is not required to be protected or the source board, destination board and optical connecting relationship in the site change, the network manager 14 sends the deletion instruction to the controller 13. Herein the deletion instruction includes at least one of the following information: the source board information, the destination board information and the optical fiber connecting relationship; and the controller 13 deletes the corresponding relationship between the source board and the destination board according to the information included in the deletion instruction. For example, when the deletion instruction includes the source board information, the controller finds the pre-stored corresponding relationship between the source board and the destination board according to the source board information, and deletes the found corresponding relationship.

For the abovementioned APR protection device, an embodiment of the present invention further provides an APR protection method, and the APR protection method provided by the embodiment of the present invention will be described below with specific embodiments in detail.

FIG. 4 is a basic processing flowchart of an APR protection method when an optical signal is abnormal according to an embodiment of the present invention, and as shown in FIG. 4, the method specifically includes the following steps.

In step 101: a destination board sends a communication abnormality message including destination board information to a controller when detecting that an optical signal is abnormal.

Herein an abnormality of the optical signal includes an abnormal phenomenon of optical signal loss, optical signal loss and weakening or the like caused by optical fiber breakage, unplugging optical fiber connector or virtual connection.

Specifically, the destination board judges whether optical power of the optical signal is lower than optical power of an optical signal received during normal communication or not after receiving the optical power, and if YES, the destination board determines that the optical signal received by the destination board is abnormal, and further determines that a communication path between a source board and the destination board is abnormal, and the destination board sends the communication abnormality message including the destination board information to the controller immediately after detecting the abnormality, or, sends the communication abnormality message including the destination board information to the controller after detecting that the optical signal is kept abnormal for more than a preset time threshold value, such as 500ms.

Herein the destination board information includes a destination board address and/or a destination board port.

In step 102: the controller is arranged to find corresponding source board information according to the destination board information, and send a first control instruction to the source board according to the source board information.

Specifically, the controller pre-stores a corresponding relationship between the source board and the destination board, herein the source board information includes a source board address and/or a destination board port.

It is important to note that it is better to adopt the same standard for the source board information and the destination board information to facilitate management of the controller over the source board information and the destination board information, that is: the source board information and the destination board information only include the board addresses, or only include the board ports, or include both the board addresses and the board ports.

Here, the first control instruction is intended to indicate the source board to reduce output power of the optical signal; and detailed descriptions refer to related descriptions in the APR protection device provided by the abovementioned embodiment of the present invention, and will not be elaborated herein.

In step 103: the source board reduces the output power of the optical signal according to the received first control instruction.

A technical principle and achieved technical effects of the APR protection method when the optical signal is abnormal in the embodiment of the present invention are similar to those of the APR protection device provided by the abovementioned embodiment of the present invention, and will not be elaborated herein.

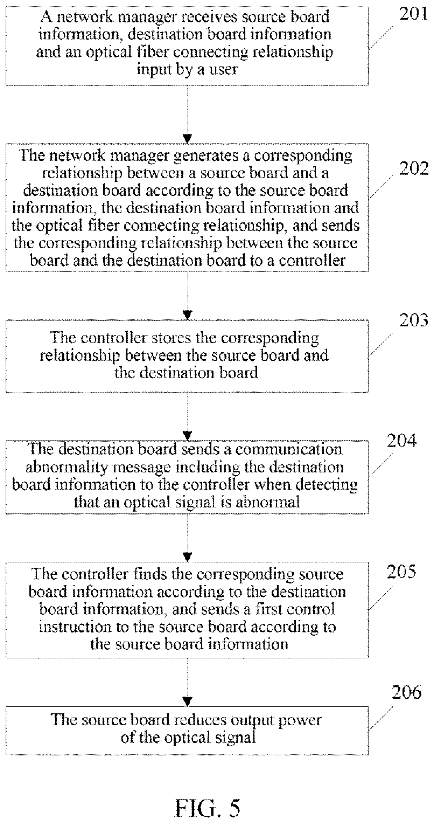

FIG. 5 is a detailed processing flowchart of an APR protection method when an optical signal is abnormal according to an embodiment of the present invention, and as shown in FIG. 5, the method includes the following steps.

In step 201: a network manager receives source board information, destination board information and optical fiber connecting relationship input by a user.

Specifically, the user may simultaneously input multiple pieces of source board information, destination board information and optical fiber connecting relationships. And for example, a form of the source board information, destination board information and optical fiber connecting relationship input by the user may be board information of source board 1-board information of destination board 1, board information of source board 2-board information of destination board 2, and the like. Herein board information of source board 1-board information of destination board 1 represents an optical fiber communication path between source board 1 and destination board 1.

In step 202: the network manager generates a corresponding relationship between a source board and a destination board according to the source board information, the destination board information and the optical fiber connecting relationship, and sends the corresponding relationship between the source board and the destination board to a controller;
or, the network manager sends the source board information, the destination board information and the optical fiber connecting relationship to the controller, and the controller generates the corresponding relationship between the source board and the destination board according to the source board information, the destination board information and the optical fiber connecting relationship.

In step 203: the controller stores the corresponding relationship between the source board and the destination board.

In step 204: the destination board sends a communication abnormality message including the destination board information to the controller when detecting that an optical signal is abnormal.

In step 205: the controller finds the corresponding source board information according to the destination board information, and sends a first control instruction to the source board according to the source board information.

In step 206: the source board reduces output power of the optical signal.

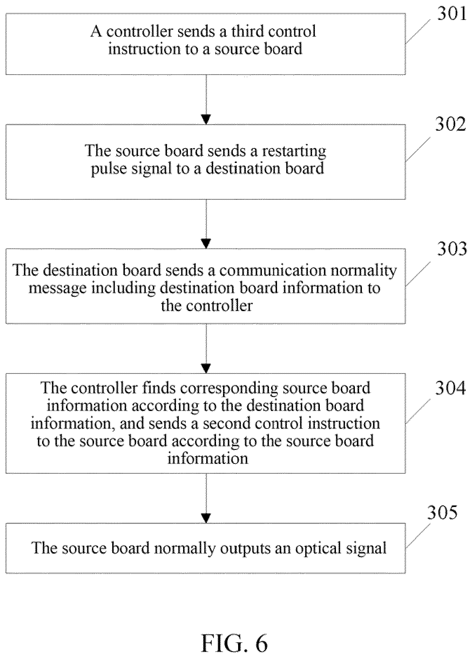

FIG. 6 is a processing flowchart of an APR protection method after an abnormality is repaired according to an embodiment of the present invention, and as shown in FIG. 6, the method specifically includes the following steps.

In step 301: a controller sends a third control instruction to a source board.

Specifically, the controller sends the third control instruction to the source board, and the controller may automatically send the third control instruction to the source board at intervals, for example, sending the third control instruction once to the source board every 100s or 300s. And the controller may also be manually controlled, for example, the controller is manually controlled to send the third control instruction to the source board after a repairer finishes repairing a communication line.

In step 302: the source board sends a restarting pulse signal to a destination board.

After receiving the restarting pulse signal, the source board sends it to the destination board.

In step 303: the destination board sends a communication normality message including destination board information to the controller.

In step 304: the controller finds corresponding source board information according to the destination board information, and sends a second control instruction to the source board according to the source board information.

In step 305: the source board normally outputs an optical signal.

In addition, when a path between the source board and the destination board is not required to be protected or the source board, destination board and optical connecting relationship in a site change, a network manager sends a deletion instruction to the controller. Herein, the deletion instruction includes at least one of the following information: the source board information, the destination board information and the optical fiber connecting relationship; and the controller deletes a corresponding relationship between the source board and the destination board according to the information included in the deletion instruction.

An embodiment of the present invention further provides a computer storage medium, in which a computer-executable instruction is stored, the computer-executable instruction is arranged to execute the method in any abovementioned embodiment.

In some embodiments provided by the present invention, it should be understood that the disclosed method and device may be implemented in another manner. The device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the equipment or the units, and may be electrical and mechanical or adopt other forms.

The abovementioned units described as separate parts may or may not be physically separated, and parts displayed as units may or may not be physical units, and namely may be located in the same place, or may also be distributed to multiple network units. Part or all of the units may be selected to achieve the purpose of the solutions of the embodiment according to a practical requirement.

In addition, each function unit in each embodiment of the present invention may be integrated into a processing unit, each unit may also physically exist independently, and two or more than two units may also be integrated into a unit. The abovementioned integrated unit may be implemented in a hardware form, and may also be implemented in form of hardware and software function unit.

Those skilled in the art should know that: all or part of the steps implementing the abovementioned method embodiment may be implemented by related hardware instructed by a program, the abovementioned program may be stored in a computer-readable storage medium, and the program is executed to execute the steps of the abovementioned method embodiment; and the abovementioned storage medium includes: various media capable of storing program codes such as mobile storage equipment, a Read-Only Memory (ROM) or a Random Access Memory (RAM).

Or, if being implemented in form of software function module and sold or used as an independent product, the embodiment of the present invention may also be stored in a computer-readable storage medium. Based on such an understanding, the technical solutions of the embodiment of the present invention substantially or parts making contributions to the conventional art may be embodied in form of software product, and the computer software product is stored in a storage medium, including a plurality of instructions arranged to enable a piece of computer equipment (which may be network equipment and the like) to execute all or part of the method in each embodiment of the present invention. The abovementioned storage medium includes: various media capable of storing program codes such as mobile storage equipment, a ROM or a RAM.

The abovementioned embodiments are only examples of the present invention and not intended to limit the present invention, and those skilled in the art should know that: modifications to the technical solutions recorded in each of the abovementioned embodiments, or equivalent replacements to part or all of technical features therein may also be made; and these modifications or replacements are made on the basis of ensuring that the essence of the corresponding technical solutions do not depart from the scope of the technical solutions of each embodiment of the present invention.

## Claims

1. An Automatic Power Reduction APR protection device, comprising: a controller (13), a source board (11) and a destination board (12), wherein, the controller is in communication connection with the source board and the destination board and the source board, and the destination board are asymmetrically and unidirectionally connected through an optical fiber, **characterized in that**,
the destination board is arranged to, when detecting that an optical signal is abnormal, send a communication abnormality message comprising destination board information to the controller;
the controller is arranged to find corresponding source board information according to the destination board information, and send a first control instruction to the source board according to the source board information; and
the source board is arranged to reduce output power of the optical signal according to the received first control instruction,
the device further comprises: a network manager (14), wherein
the network manager is arranged to generate the corresponding relationship between the source board and the destination board according to the source board information, the destination board information and an optical fiber connecting relationship, and send the corresponding relationship between the source board and the destination board to the controller for storage;
or,
the network manager is arranged to send the source board information, the destination board information and the optical fiber connecting relationship to the controller; and correspondingly, the controller is further arranged to generate the corresponding relationship between the source board and the destination board according to the source board information, the destination board information and the optical fiber connecting relationship.

2. The device according to claim 1, wherein the source board and the destination board are located in a same site.

3. The device according to claim 2, wherein the controller is further arranged to store a corresponding relationship between the source board and the destination board.

4. The device according to claim 1, wherein the network manager is further arranged to, before generating the corresponding relationship between the source board and the destination board, or before sending the source board information, the destination board information and the optical fiber connecting relationship to the controller, receive the source board information, destination board information and optical fiber connecting relationship input by a user.

5. The device according to any one of claims 1-4, wherein the destination board is arranged to detect that the optical signal is kept abnormal for more than a preset time threshold value.

6. The device according to any one of claims 1-4, wherein
the controller is further arranged to, after the source board reduces the output power of the optical signal, send a third control instruction to the source board, receive a communication normality message comprising the destination board information from the destination board, find the corresponding source board information according to the destination board information, and send a second control instruction to the source board according to the source board information;
the destination board is further arranged to send the communication normality message comprising the destination board information to the controller after receiving a restarting pulse signal sent by the source board; and
the source board is further arranged to send the restarting pulse signal to the destination board after receiving the third control instruction sent by the controller, and normally output an optical signal after receiving the second control instruction sent by the controller.

7. The device according to any one of claims 1-4, wherein the board information comprises a board address and/or a board port.

8. An Automatic Power Reduction APR protection method, **characterized by** comprising:
when detecting that an optical signal is abnormal, sending, by a destination board, a communication abnormality message comprising destination board information to a controller (101);
finding, by the controller, corresponding source board information according to the destination board information, and sending a first control instruction to a source board according to the source board information (102); and
reducing, by the source board, output power of the optical signal according to the received first control instruction (103),
the method further comprises:
generating, by a network manager, the corresponding relationship between the source board and the destination board according to the source board information, the destination board information and an optical fiber connecting relationship, and sending the corresponding relationship between the source board and the destination board to the controller (202);
or,
sending, by the network manager, the source board information, the destination board information and the optical fiber connecting relationship to the controller; and
generating, by the controller, the corresponding relationship between the source board and the destination board according to the source board information, the destination board information and the optical fiber connecting relationship.

9. The method according to claim 8, before sending, by the destination board, the communication abnormality message comprising the destination board information to the controller, further comprising:
storing, by the controller, a corresponding relationship between the source board and the destination board (203).

10. The method according to claim 8, before generating, by the network manager, the corresponding relationship between the source board and the destination board, or before sending, by the network manager, the source board information, the destination board information and the optical fiber connecting relationship, further comprising:
receiving, by the network manager, the source board information, destination board information and optical fiber connecting relationship input by a user (201).

11. The method according to any one of claims 8-10, wherein detecting, by the destination board, that the optical signal is abnormal comprises:
detecting, by the destination board, that the optical signal is kept abnormal for more than a preset time threshold value.

12. The method according to any one of claims 8-10, after reducing, by the source board, the output power of the optical signal, further comprising:
sending, by the controller, a third control instruction to the source board (301);
sending, by the source board, a restarting pulse signal to the destination board (302);
sending, by the destination board, a communication normality message comprising the destination board information to the controller (303);
finding, by the controller, the corresponding source board information according to the destination board information;
sending, by the controller, a second control instruction to the source board according to the source board information (304); and
normally outputting, by the source board, an optical signal (305).

13. The method according to any one of claims 8-10, wherein
the board information comprises a board address and/or a board port.

14. A computer storage medium, storing a computer-executable instruction, wherein the computer-executable instruction is arranged to execute the method according to any one of claims 8-13.

## Patentansprüche

1. Automatische Leistungsreduzierungs-(APR)-Schutzvorrichtung, umfassend: eine Steuerung (13), eine Quellplatine (11) und eine Zielplatine (12), wobei die Steuerung in Kommunikationsverbindung mit der Quellplatine und der Zielplatine ist und wobei die Quellplatine und die Zielplatine asymmetrisch und unidirektional über eine optische Lichtleitfaser verbunden sind, **dadurch gekennzeichnet, dass**
die Zielplatine, wenn ein anormales optisches Signal erfasst wird, eine Kommunikationsstörungsmeldung umfassend eine Zielplatineninformation an die Steuerung sendet;
die Steuerung angeordnet ist, um die entsprechende Quellplatineninformation auf der Grundlage der Zielplatineninformation zu finden und einen ersten Steuerbefehl an die Quellplatine auf der Grundlage der Quellplatineninformation zu senden; und
die Quellplatine angeordnet ist, um die Ausgangsleistung des optischen Signals auf der Grundlage des empfangenen ersten Steuerbefehls zu reduzieren,
die Vorrichtung umfasst ferner einen Netzmanager (14), wobei
der Netzmanager dazu angeordnet ist, um die entsprechende Beziehung zwischen der Quellplatine und der Zielplatine auf der Grundlage der Quellplatineninformation, der Zielplatineninformation und einer optischen Lichtleitfaser-Verbindungsbeziehung zu erzeugen und die entsprechende Beziehung zwischen der Quellplatine und der Zielplatine zur Speicherung an die Steuerung zu senden;
oder
der Netzmanager dazu angeordnet ist, um die Quellplatineninformation, die Zielplatineninformation und die Lichtleitfaser-Verbindungsbeziehung an die Steuerung zu senden; und dementsprechend die Steuerung ferner dazu angeordnet ist, um die entsprechende Beziehung zwischen der Quellplatine und der Zielplatine auf der Grundlage der Quellplatineninformation, der Zielplatineninformation und der Lichtleitfaser-Verbindungsbeziehung zu erzeugen.

2. Vorrichtung nach Anspruch 1, wobei die Quellplatine und die Zielplatine an derselben Stelle angeordnet sind.

3. Vorrichtung nach Anspruch 2, wobei die Steuerung ferner dazu angeordnet ist, um die entsprechende Beziehung zwischen der Quellplatine und der Zielplatine zu speichern.

4. Vorrichtung nach Anspruch 1, wobei der Netzmanager ferner dazu angeordnet ist, um vor Erzeugen der entsprechenden Beziehung zwischen der Quellplatine und der Zielplatine oder vor Senden der Quellplatineninformation, der Zielplatineninformation und der optischen Lichtleitfaser-Verbindungsbeziehung an die Steuerung die von einem Benutzer eingegebene Quellplatineninformation, Zielplatineninformation und optische Lichtleitfaser-Verbindungsbeziehung zu empfangen.

5. Vorrichtung nach einem der Ansprüche 1 - 4, wobei die Zielplatine angeordnet ist, um zu erfassen, ob das optische Signal länger als ein voreingestellter Zeitschwellenwert anormal gehalten wird.

6. Vorrichtung nach einem der Ansprüche 1 - 4, wobei
die Steuerung ferner dazu angeordnet ist, um nach der Reduzierung der Ausgangsleistung des optischen Signals durch die Quellplatine einen dritten Steuerbefehl an die Quellplatine zu senden, eine Kommunikation-OK-Meldung umfassend die Zielplatineninformation von der Zielplatine zu erhalten, die entsprechende Quellplatineninformation auf der Grundlage der Zielplatineninformation zu finden und einen zweiten Steuerbefehl auf der Grundlage der Quellplatineninformation an die Quellplatine zu senden;
die Zielplatine ist ferner dazu angeordnet, um nach Empfang eines von der Quellplatine gesendeten Neustart-Impulssignals die Kommunikationsnormalität-Meldung umfassend die Zielplatineninformation an die Steuerung zu senden; und
die Quellplatine ferner dazu angeordnet ist, um nach Empfang des von der Steuerung gesendeten dritten Steuerbefehls das Neustart-Impulssignal an die Zielplatine zu senden und nach Empfang des von der Steuerung gesendeten zweiten Steuerbefehls ein optisches Signal normal auszugeben.

7. Vorrichtung nach einem der Ansprüche 1 - 4, wobei die Platineninformation eine Platinenadresse und/oder einen Platinenanschluss umfasst.

8. Automatisches Leistungsreduzierungs-(APR)-Schutzverfahren, **dadurch gekennzeichnet, dass** es Folgendes umfasst:
wenn erfasst wird, dass ein optisches Signal anormal ist, Senden - seitens einer Zielplatine - einer Kommunikationsstörungsmeldung umfassend eine Zielplatineninformation an eine Steuerung (101);
Finden - seitens der Steuerung - der entsprechenden Quellplatineninformation auf der Grundlage der Zielplatineninformation und Senden eines ersten Steuerbefehls an eine Quellplatine auf der Grundlage der Quellplatineninformation (102); und
Reduzieren - seitens der Quellplatine - der Ausgangsleistung des optischen Signals auf der Grundlage des empfangenen ersten Steuerbefehls (103),
wobei das Verfahren weiter Folgendes umfasst:
Erzeugen - seitens eines Netzmanagers - der entsprechenden Beziehung zwischen der Quellplatine und der Zielplatine auf der Grundlage der Quellplatineninformation, der Zielplatineninformation und einer optischen Lichtleitfaser-Verbindungsbeziehung und Senden der entsprechenden Beziehung zwischen der Quellplatine und der Zielplatine an die Steuerung (202);
oder
Senden - seitens des Netzmanagers - der Quellplatineninformation, der Zielplatineninformation und der optischen Lichtleitfaser-Verbindungsbeziehung an die Steuerung; und
Erzeugen - seitens der Steuerung - der entsprechenden Beziehung zwischen der Quellplatine und der Zielplatine auf der Grundlage der Quellplatineninformation, der Zielplatineninformation und der optischen Lichtleitfaser-Verbindungsbeziehung.

9. Verfahren nach Anspruch 8, welches, vor Senden - seitens der Zielplatine - der Kommunikationsstörungsmeldung umfassend die Zielplatineninformation an die Steuerung, ferner Folgendes umfasst:
Speichern - seitens der Steuerung - einer entsprechenden Beziehung zwischen der Quellplatine und der Zielplatine (203).

10. Verfahren nach Anspruch 8, welches vor Erzeugen - seitens des Netzmanagers - der entsprechenden Beziehung zwischen der Quellplatine und der Zielplatine oder vor Senden - seitens des Netzmanagers - der Quellplatineninformation, der Zielplatineninformation und der optischen Lichtleitfaser-Verbindungsbeziehung ferner Folgendes umfasst:
Empfangen - seitens des Netzmanagers - der von einem Benutzer (201) eingegebenen Quellplatineninformation, Zielplatineninformation und optischen Lichtleitfaser-Verbindungsbeziehung.

11. Verfahren nach einem der Ansprüche 8 - 10, wobei das Erfassen - seitens der Zielplatine -, dass das optische Signal abnormal ist, Folgendes umfasst:
Erfassen - seitens der Zielplatine - dass das optische Signal länger als ein voreingestellter Zeitschwellenwert anormal gehalten wird.

12. Verfahren nach einem der Ansprüche 8 - 10, welches nach Reduzieren der Ausgangsleistung des optischen Signals seitens der Quellplatine, ferner Folgendes umfasst:
Senden - seitens der Steuerung - eines dritten Steuerbefehls an die Quellplatine (301); Senden - seitens der Quellplatine - eines Neustart-Impulssignals an die Zielplatine (302);
Senden - seitens der Zielplatine - einer Kommunikationsnormalität-Meldung umfassend die Zielplatineninformation an die Steuerung (303);
Finden - seitens der Steuerung - der entsprechenden Quellplatineninformation auf der Grundlage der Zielplatineninformation;
Senden - seitens der Steuerung - eines zweiten Steuerbefehls an die Quellplatine auf der Grundlage der Quellplatineninformation (304); und
normales Ausgeben eines optischen Signals (305) seitens der Quellplatine.

13. Verfahren nach einem der Ansprüche 8 - 10, wobei
die Platineninformation eine Platinenadresse und/oder einen Platinenanschluss umfasst.

14. Computer-Speichermedium, das einen computerausführbaren Befehl speichert, wobei der computerausführbare Befehl angeordnet ist, um das Verfahren nach einem der Ansprüche 8 - 13 auszuführen.

## Revendications

1. Dispositif de protection de réduction automatique de puissance APR, comprenant : un dispositif de commande (13), une carte source (11) et une carte de destination (12), dans lequel, le dispositif de commande est en connexion de communication avec la carte source et la carte de destination, et la carte source et la carte de destination sont connectées de manière asymétrique et unidirectionnelle par le biais d'une fibre optique, **caractérisé en ce que**,
la carte de destination est agencée pour, quand elle détecte qu'un signal optique est anormal, envoyer un message d'anomalie de communication comprenant des informations de carte de destination au dispositif de commande ;
le dispositif de commande est agencé pour trouver des informations de carte source correspondantes en fonction des informations de carte de destination, et envoyer une première instruction de commande à la carte source en fonction des informations de carte source ; et
la carte source est agencée pour réduire une puissance de sortie du signal optique en fonction de la première instruction de commande reçue,
le dispositif comprend en outre : un gestionnaire de réseau (14), dans lequel
le gestionnaire de réseau est agencé pour générer la relation de correspondance entre la carte source et la carte de destination en fonction des informations de carte source, des informations de carte de destination et d'une relation de connexion de fibre optique, et envoyer la relation de correspondance entre la carte source et la carte de destination au dispositif de commande pour le stockage ;
ou
le gestionnaire de réseau est agencé pour envoyer les informations de carte source, les informations de carte de destination et la relation de connexion de fibre optique au dispositif de commande ; et, en conséquence, le dispositif de commande est agencé en outre pour générer la relation de correspondance entre la carte source et la carte de destination en fonction des informations de carte source, des informations de carte de destination et de la relation de connexion de fibre optique.

2. Dispositif selon la revendication 1, dans lequel la carte source et la carte de destination sont situées dans un même site.

3. Dispositif selon la revendication 2, dans lequel le dispositif de commande est agencé en outre pour stocker une relation de correspondance entre la carte source et la carte de destination.

4. Dispositif selon la revendication 1, dans lequel le gestionnaire de réseau est agencé en outre pour, avant la génération de la relation de correspondance entre la carte source et la carte de destination, ou avant l'envoi des informations de carte source, des informations de carte de destination et de la relation de connexion de fibre optique au dispositif de commande, recevoir les informations de carte source, les informations de carte de destination et la relation de connexion de fibre optique saisies par un utilisateur.

5. Dispositif selon l'une quelconque des revendications 1 à 4, dans lequel la carte de destination est agencée pour détecter que le signal optique est maintenu anormal pendant plus qu'une valeur de seuil de temps prédéfinie.

6. Dispositif selon l'une quelconque des revendications 1 à 4, dans lequel
le dispositif de commande est agencé en outre pour, après que la carte source réduit la puissance de sortie du signal optique, envoyer une troisième instruction de commande à la carte source, recevoir un message de normalité de communication comprenant les informations de carte de destination à partir de la carte de destination, trouver les informations correspondantes de carte source en fonction des informations de carte de destination, et envoyer une deuxième instruction de commande à la carte source en fonction des informations de carte source ;
la carte de destination est agencée en outre pour envoyer le message de normalité de communication comprenant les informations de carte de destination au dispositif de commande après la réception d'un signal d'impulsion de redémarrage envoyé par la carte source ; et
la carte source est agencée en outre pour envoyer le signal d'impulsion de redémarrage à la carte de destination après la réception de la troisième instruction de commande envoyée par le dispositif de commande, et délivrer normalement en sortie un signal optique après la réception de la deuxième instruction de commande envoyée par le dispositif de commande.

7. Dispositif selon l'une quelconque des revendications 1 à 4, dans lequel les informations de carte comprennent une adresse de carte et/ou un port de carte.

8. Procédé de protection de réduction automatique de puissance APR, **caractérisé en ce qu'**il comprend :
lors de la détection qu'un signal optique est anormal, l'envoi, par une carte de destination, d'un message d'anomalie de communication comprenant des informations de carte de destination à un dispositif de commande (101) ;
la découverte, par le dispositif de commande, d'informations correspondantes de carte source en fonction des informations de carte de destination, et l'envoi d'une première instruction de commande à une carte source en fonction des informations de carte source (102) ; et
la réduction, par la carte source, d'une puissance de sortie du signal optique en fonction de la première instruction de commande reçue (103),
le procédé comprend en outre :
la génération, par un gestionnaire de réseau, de la relation de correspondance entre la carte source et la carte de destination en fonction des informations de carte source, des informations de carte de destination et d'une relation de connexion de fibre optique, et l'envoi de la relation de correspondance entre la carte source et la carte de destination au dispositif de commande (202) ;
ou
l'envoi, par le gestionnaire de réseau, des informations de carte source, des informations de carte de destination et de la relation de connexion de fibre optique au dispositif de commande ; et
la génération, par le dispositif de commande, de la relation de correspondance entre la carte source et la carte de destination en fonction des informations de carte source, des informations de carte de destination et de la relation de connexion de fibre optique.

9. Procédé selon la revendication 8, avant l'envoi, par la carte de destination, du message d'anomalie de communication comprenant les informations de carte de destination au dispositif de commande, comprenant en outre :
le stockage, par le dispositif de commande, d'une relation de correspondance entre la carte source et la carte de destination (203).

10. Procédé selon la revendication 8, avant la génération, par le gestionnaire de réseau, de la relation de correspondance entre la carte source et la carte de destination, ou avant l'envoi, par le gestionnaire de réseau, des informations de carte source, des informations de carte de destination et de la relation de connexion de fibre optique, comprenant en outre :
la réception, par le gestionnaire de réseau, des informations de carte source, des informations de carte de destination et de la relation de connexion de fibre optique saisies par un utilisateur (201).

11. Procédé selon l'une quelconque des revendications 8-10, dans lequel la détection, par la carte de destination, que le signal optique est anormal comprend :
la détection, par la carte de destination, que le signal optique est maintenu anormal pendant plus qu'une valeur de seuil de temps prédéfinie.

12. Procédé selon l'une quelconque des revendications 8-10, après la réduction, par la carte source, de la puissance de sortie du signal optique, comprenant en outre :
l'envoi, par le dispositif de commande, d'une troisième instruction de commande à la carte source (301) ;
l'envoi, par la carte source, d'un signal d'impulsion de redémarrage à la carte de destination (302) ;
l'envoi, par la carte de destination, d'un message de normalité de communication comprenant les informations de carte de destination au dispositif de commande (303) ;
la découverte, par le dispositif de commande, des informations correspondantes de carte source en fonction des informations de carte de destination ;
l'envoi, par le dispositif de commande, d'une deuxième instruction de commande à la carte source en fonction des informations de carte source (304) ; et
la fourniture normale en sortie, par la carte source, d'un signal optique (305).

13. Procédé selon l'une quelconque des revendications 8 à 10, dans lequel
les informations de carte comprennent une adresse de carte et/ou un port de carte.

14. Support de stockage informatique, stockant une instruction exécutable par ordinateur, dans lequel l'instruction exécutable par ordinateur est agencée pour exécuter le procédé selon l'une quelconque des revendications 8 à 13.
